# EUROPEAN PATENT SPECIFICATION

(11) **EP 0 544 462 B1**
(45) Date of publication and mention of the grant of the patent: **04.02.1998**
(21) Application number: 92310581.1
(22) Date of filing: 19.11.1992
(51) Int. Cl.: H04Q 7/22, H04B 7/26

(54) **Method and apparatus for bundling page request messages in a cellular radiotelephone system**
Verfahren und Gerät zur Bündelung von Rufaufträgen in einem zellularen Funktelefonsystem
Procédé et dispositif pour regrouper les demandes d'appel sélectif dans un système de radio-téléphonie cellulaire

(30) Priority: 26.11.1991 US 798438
(43) Date of publication of application: 02.06.1993
(73) Proprietor: AT&T Corp., New York, NY 10013-2412 (US)
(72) Inventor: Fry, George Edward, Jr., Morris Plains, New Jersey 07950 (US)
(74) Representative: Buckley, Christopher Simon Thirsk

(56) References cited:
- EP-A- 0 428 126
- PATENT ABSTRACTS OF JAPAN vol. 13, no. 23 (E-705) & JP-A-63 227 138

## Description

This invention relates to apparatus for processing paging commands in a cellular radiotelephone system, and to methods of processing paging messages in a cellular radiotelephone system.

Availability of mobile stations (MS) to receive calls is determined by transmitting paging requests, a process whereby the paging request is sent by cell site equipment to all mobile stations within its service area either over a voice channel or a special set up channel. The dissemination of paging information is performed in correspondence to industry or government regulations or standards. TIA (Telephone Industry Association, a U.S. Standards body) and GSM (Groupe Speciale Mobile, a European Cellular Standard body) are typical organizations issuing standards controlling the operation of Cellular Radiotelephone Networks. A description of a GSM cellular radiotelephone system is provided in the document "General Description of a GSM PLMN (public land mobile network), and is available from the ETSI.

Issued GSM standards, for Europe, require that mobile stations (MS) be assigned to a paging group. Page requests for individual MSs of the same paging group are bundled together into one paging request message that is broadcast to all MSs in that paging group.

According to these GSM standards, page messages generated at a mobile switching center (MSC) are sent to a base station controller (BSC). The BSC produces a paging command message containing the ID of a single MS to be paged and sends it to a base transceiver station (BTS). The BTS queues the paging command messages received from the BSC and at specified intervals bundles them into a single paging request message. The paging request message is then transmitted to the MSs over the Air Interface.

The methodology chosen for queuing the paging command messages prior to the formation and transmission of the paging request messages has a significant impact on the operating efficiency of the paging operation. If the storage capacity of the base transceiver is exceeded, the overflow of excess paging command messages in the queue are dropped out of the cellular radiotelephone system and potential subscriber revenue may be lost. This may be somewhat alleviated by increasing the storage capacity, but this new increased storage capacity is again subject to the same overflow conditions.

According to one aspect of this invention there is provided apparatus as claimed in claim 1.

According to another aspect of this invention there is provided a method as claimed in claim 5.

This invention is a methodology for queuing paging command messages that reduces the probability of dropping paging command messages without increasing memory requirements.

Storage for paging command messages is partitioned into paging buffers, one for each paging group. The GSM standards identify two types of MS IDs, Temporary Mobile Station Identification (TMSI) and International Mobile Station Identity (IMSI). Each paging group maintains two paging stacks: one for IMSI MS IDs and one for TMSI MS IDs. The TMSI stack will hold up to four TMSI MS IDs while the IMSI stack will hold up to two IMSI MS IDs. MS IDs received within the paging command messages are queued according to their paging group and type of identification.

For each paging group the MS IDs that are queued in the BTS are bundled into different types of paging request messages in one of two processes: a synchronous process and an asynchronous process. In the synchronous process paging requests are constructed at specific intervals. The type of paging request message constructed is based on the number of MSs contained in the paging group's TMSI and IMSI paging stacks. In the asynchronous bundling process, the paging request messages are constructed when one of the paging group's paging stacks becomes full. This may happen before the paging interval has expired.

By dividing the paging command queue into separate paging groups and placing MS IDs only onto one of two paging stacks, memory requirements are limited by the number of paging groups supported by the system (81 in a GSM system). Each MS ID may occupy up to 10 bytes. Thus, the queuing methodology allows for 81 x ((4 x 10) + (2 x 10)) = 4860 bytes maximum. The asynchronous portion of the invention will execute when one of the paging stacks is full. Thus, there can only be three TMSI and one IMSI queued in a paging group at any one time. The next MS ID will cause a paging request message to be built and the full paging stack to be flushed. This limits memory requirements to 81 x ((3 x 10) + (1 x 10)) = 3240 bytes, or only 67% of the maximum. This reduces to 0 the probability that paging commands will be dropped due to overflow of paging memory.

In storing only the MS IDs on the paging stacks of the paging groups, a significant amount of preprocessing has taken place. The type of paging request message is known, via lookup table, indexed by the number of TMSI and IMSI MS IDs. The MS IDs themselves have been removed from the paging command messages. The only remaining task is to put the MS IDs in their proper place within the paging request messages. Further, the asynchronous portion of the invention has assured that there is a minimum of paging request messages to construct at the time of execution of the synchronous portion. The efficiency of the synchronous portion of the invention is improved by the asynchronous part and this preprocessing of paging command messages.

### Brief Description of the Drawing

In the drawing:
FIG. 1 is a schematic of a cellular radiotelephone system in which the invention may be applied;
FIG. 2 is a block schematic of a paging message processing arrangement ;
FIG. 3 is a block diagram of a base station control and transmission equipment in which the invention is applied;
FIG. 4 is a flow diagram of the control sequence in bundling the paging requests in the equipment of FIGS. 2 and 3; and
FIG. 5 is a table of illustrative bundling arrangements in the system of FIG. 2.

### Detailed Description

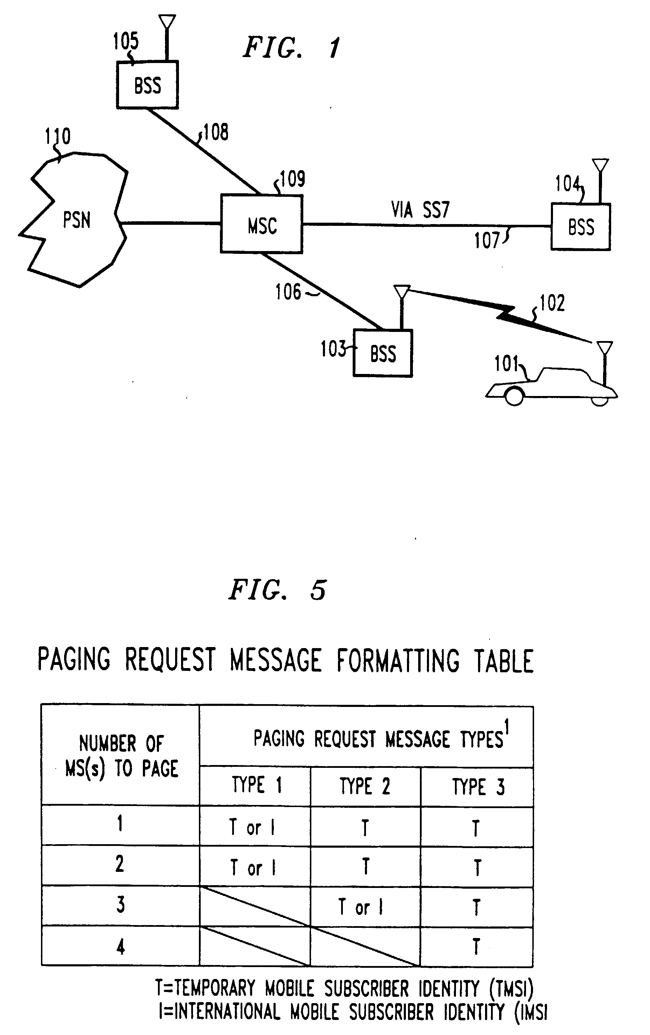

The invention is concerned with a wireless telephone system in which a mobile telephone station is connected by radio signals to a land telephone network with conventional switched lines. A typical cellular radiotelephone system is shown in schematic form in FIG. 1. Individual mobile radiotelephones or subscriber stations (MS) 101 are connected, via radio airwave links 102, to a base station 103 which controls the radio setup and radio communication between the mobiles 101 and the base station 103. The base stations each include a base station transceiver (BTS) and a base station controller (BSC) as discussed here below.

A plurality of base stations 103, 104 and 105 are connected in turn, via trunks 106, 107 and 108, to a mobile switching center (MSC) 109 which provides switching facilities to interconnect the public switched telephone network 110 with the base station in a manner appropriate for communicating with the mobile 101.

In order to properly direct incoming calls to the correct mobile, the location of the mobile and the identity of its serving base station must be ascertained. This is performed by a paging operation in which the individual base stations broadcast paging requests to all the mobiles within its broadcast range. These paging requests occur upon a demand for a telephone connection. The individual MSs respond to the paging requests that contain their identifiers announcing their identity and availability to receive incoming calls. This paging process is performed in accordance with the defined standards of the controlling regulatory authority of the local cellular radiotelephone system.

Under the provisions of the GSM Recommendations, all paging command messages are queued at the BTS and transmitted as a paging request within a single transmission period To place these messages in a common queue is not desirable. The use of a common queue results in paging messages being dropped if the number of paging commands exceeds the size of the queue.

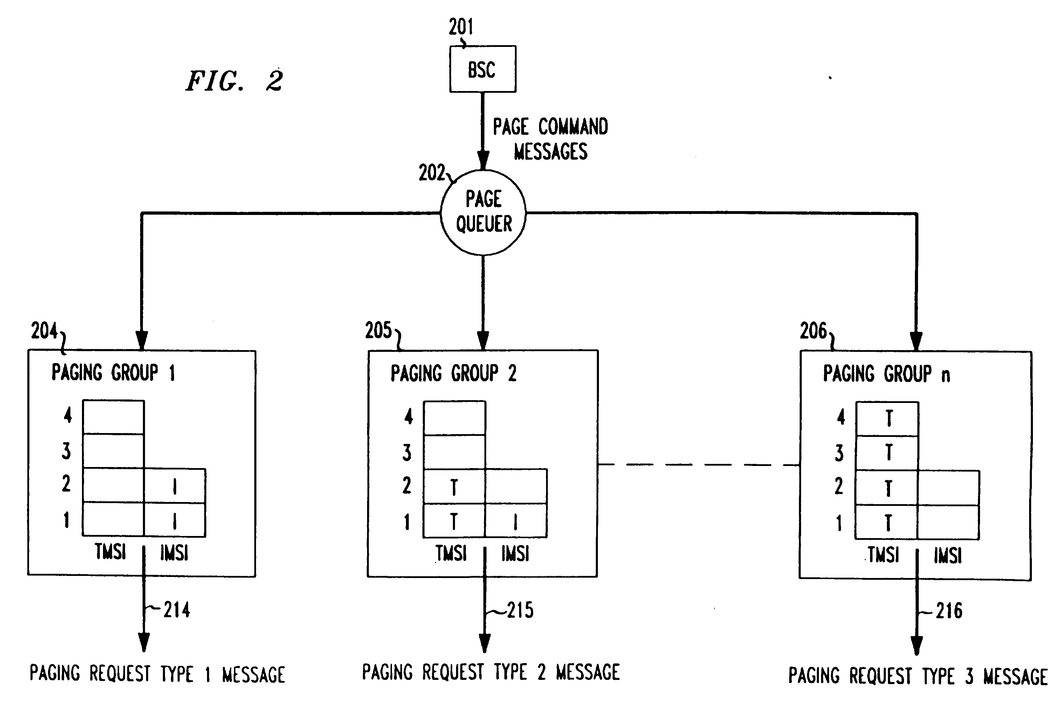

A method of bundling paging messages is shown in block process form in FIG. 2. A base station controller 201 receives downlink page messages from the MSC over a paging channel. These paging messages are forwarded to base station controllers (BSC) responsible for the MSs (i.e., those MSs which may be within the service area or cell of the base station). In the illustrative embodiment, the base station controller 201 manages base station transceivers (BTS) which may include the MSs to be paged in the range of coverage.

Base station controller 201 generates page command messages containing the ID of a single MS and sends them to each BTS. In the illustrative GSM system each MS is identified by one of two types of identifiers; an International Mobile Station Identity (IMSI) or a Temporary Mobile Station Identity (TMSI). The BSC 201 generates page command messages which are transmitted downlink to a page queuer 202 associated with a particular BTS associated with the MS to be paged. The page queuer 202 is functionally concerned with receiving page command messages; identifying their type (i.e., TMSI, IMSI) and forwarding them to available storage slots in one of the plurality of the page group storage bins 204, 205 and 206. Each page group storage bin has storage facilities for storing four TMSI paging commands and two IMSI paging commands. Each page group storage bin is operative to monitor the number of paging commands it is storing. When a page group storage bin becomes full, the asynchronous portion of the paging system requires a paging request message to be constructed from its contents. The synchronous feature of the paging system will, at intervals, construct paging request messages from the content of these page group storage bins that are not full, thereby ensuring that all paging commands are broadcast to the MSs within the paging interval.

In the illustrative arrangement of FIG. 2, the paging group storage bin 204 has two IMSI type paging commands from which it generates a type 2 paging request which is output on lead 214 to be coupled to a transceiver for broadcast transmission to the MSs. The page group storage bin 205 has two TMSI paging commands and one IMSI paging command stored therein. This is output on output lead 215 as a type 2 paging request message. Page group storage bin 206 with four TMSI paging commands generates a type 3 paging request message on output lead 216.

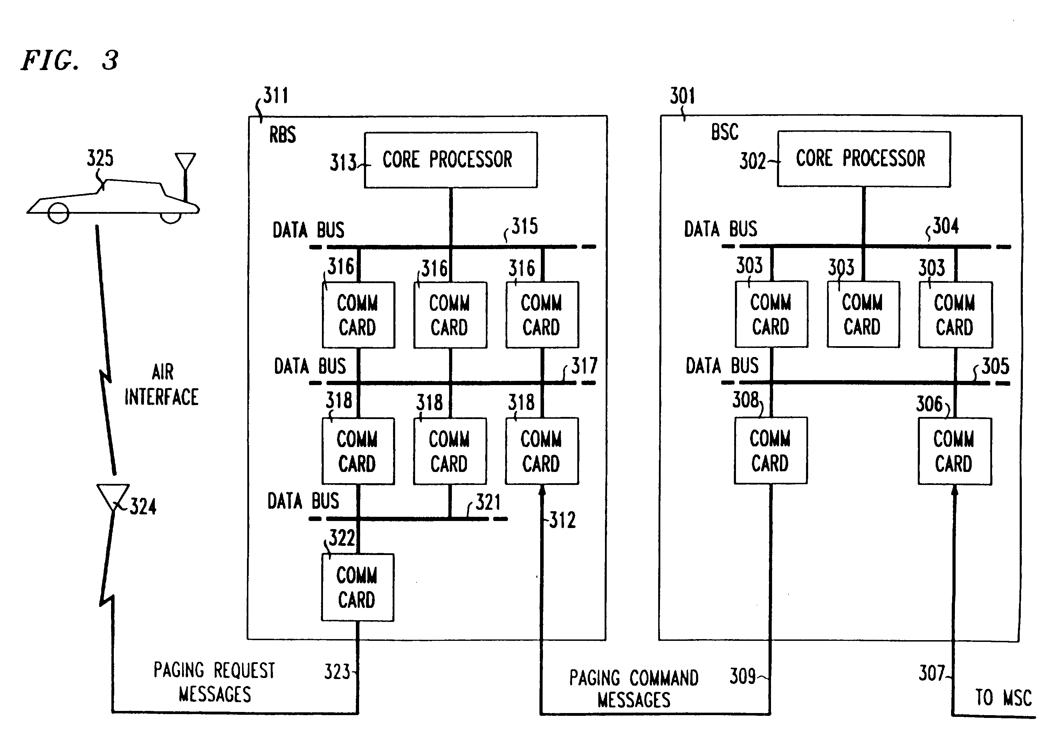

The processing arrangement, embodied in data processing equipment at the base station, and operative to perform the functional structuring of paging requests is shown in the block diagram of FIG. 3. A base station controller 301 (BSC) includes data processing components under the control of a core processor 302. Core processor 302 is coupled to a plurality of data processing cards 303 via a data bus 304. These data processing cards 303 are connected to a second data bus 305. A data processing card 306 connected to bus 305 is connected, via trunk 307, to receive paging commands from the MSC. A second data processing card 308 couples paging command messages from the bus 305 to a trunk line 309.

Paging command messages on trunk line 309 are applied to a data processing card 312 in the radio base station (RBS) 311. The RBS is under control of a core processor 313 which is connected to the data bus 315. A plurality of data cards 316 are connected to the data bus 315 and to a second data bus 317. A second plurality of data cards 318 interconnect the bus 315 to a second data bus 321. A data card 322 processes the data for airwave transmission and couples it, via a line 323, to an antenna 324 which broadcasts it to be received by an MS 325 to be paged.

In operation, the BSC 301 and the RBS 311 are stored data processors operating in response to a stored program which dictates its operations. The core processors 303 and 313 correspond to a control computer capable of storing the stored program and executing its commands to control the operations of the data processing cards included within the BSC and RBS, respectively. The BSC 301 is operative to handle incoming signaling and voice messages from the MSC and separate those control and voice signals to be transmitted to the RBS 311.

Data card 306 accepts voice and signaling messages and applies both messages to the bus 305. Voice messages are directed to the data card 308 for processing and application to the trunk 309. Signaling messages including paging messages are directed to the data cards 303 for processing under control of the core processor 302. These signaling messages are transmitted to the trunk 309, via the data card 308.

The voice and signaling messages processed by the BSC 301 are received by the data card 312 which distributes the messages to the bus 317. Voice messages are coupled by the bus 317 to the data cards 318 and, via bus 321, to data card 322 which processes these messages for radio transmission, via the trunk 323, and antenna 324 to the MS 325.

Signaling messages are coupled via the bus 317 to the data cards 316. Processing of these signaling messages is under control of the stored program of core processor 313 whose instructions are applied, via bus 315, to the data cards 316. The signaling messages including formatted paging requests are transmitted via the data card 322 to the trunk 323 and antenna 324 for broadcast to the MS 325.

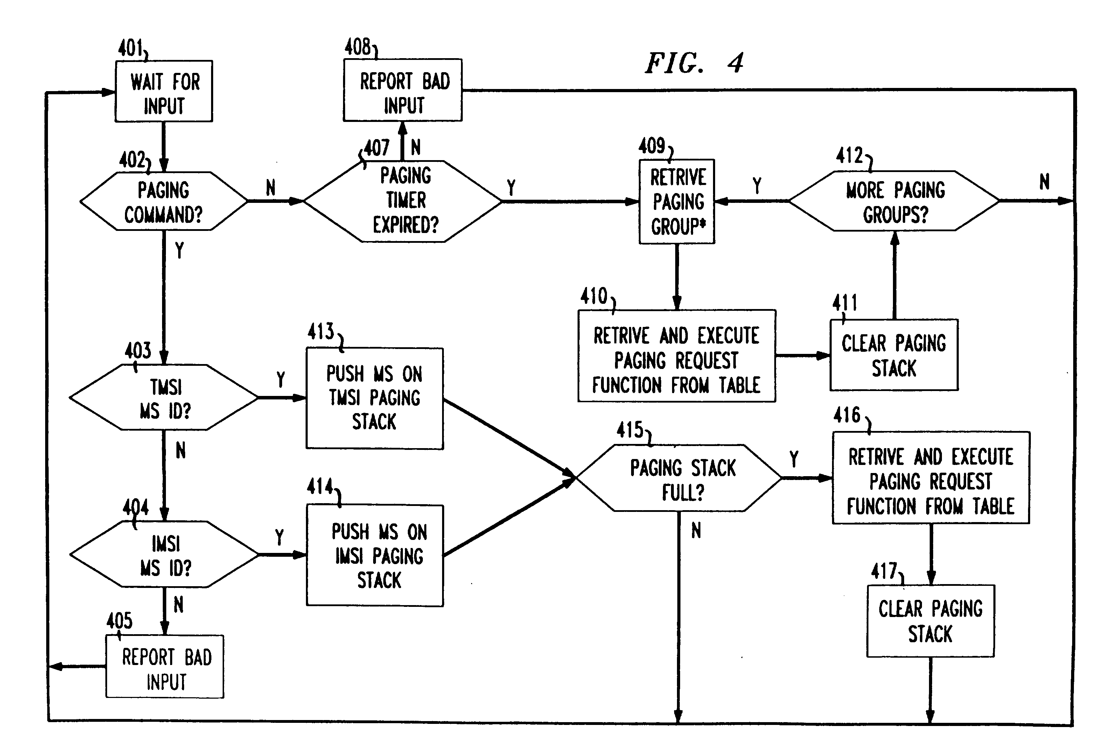

The processing of the paging messages by the BSC converts the paging messages from the MSC into a paging command structural form. These paging commands are applied to the RBS 311 and parsed into the paging request messages having a structural form suitable for the MS being paged. This process is shown in detail by the flow control process shown in FIG. 4. This flow process is reflective of the stored instructions that convert the paging commands into the paging request that is transmitted to the MS.

The initial operation of the flow process designated in the block 401 is to wait for signaling input from the BSC. The subsequent decision block 402 designates an instruction to determine if the signal message is a paging command. If the signal message is not a paging command, the instruction flow proceeds to the decision block 407 whose designated instruction determines if a specified time interval has elapsed. This timing interval is provided by a master clock included in the BTS and is included for the purpose of forcing the transmission of paging requests in a timely manner. If the signal message is not a timer expiration, the process flow proceeds to block 408 whose designated instruction reports a bad input indicating that the received signal message was of an invalid type. Flow proceeds back to the block 401 where the instruction provided is to wait for further input from the BSC.

When the timer has expired, the process flow proceeds from the decision block 407 to the block 409 whose designated instruction is to retrieve all stored paging commands that have been grouped into storage areas to form the group paging requests. These paging commands are bundled together by the designated commands of block 410 and read out of the storage area as a particular type paging request for transmission as a group paging request to the MSs. The flow process proceeds to block 411 which clears the paging stacks of the paging groups and proceeds to determine in decision block 412 if there are more paging groups to be retrieved. In response to an affirmative answer, the flow process proceeds to the block 409 to repeat the process flow, via blocks 410, 411 and 412. If there are no more paging groups to be processed, the flow proceeds to input block 401. The above sequence comprises the synchronous portion of the invention.

Upon determination, as per the instructions of decision block 402, that a paging command has been received, a paging command is evaluated in a subsequent decision block 403 to determine if it is a TMSI or an IMSI intended for a TMSI or an IMSI identified MS (MS ID), respectively. If the paging command is a TMSI command for a TMSI MS ID, the flow proceeds to block 413 whose designated instructions are to place the MS TMSI on a TMSI stack in a paging command storage area, such as shown symbolically in FIG. 2.

If the paging command is an IMSI MS ID the process flow passes through the decision block 404 whose designated instructions direct the process flow to the block 414 whose designated instructions are to place the MS IMSI on the IMSI stack in its paging command storage area, such as shown symbolically in FIG. 2.

The subsequent flow process from each of the two blocks 413 and 414 proceeds to the decision block 415 which is operative according to its designated instructions to determine if the paging stack just accessed by block 413 or 414 is full. If the stack is full, the flow process proceeds to block 416 whose instructions are to send a specified type message to the MSs. In doing so, the paging stack is cleared as per the designated instructions of block 417. The flow process proceeds to the input block 401. The above set of instructions comprise the asynchronous portion of the invention.

If the signal message contains neither IMSI or TMSI MS IDs the flow process proceeds through blocks 403 and 404 to block 405 which reports the no paging command signal message and returns the process flow to the input block 401.

As disclosed in describing the illustrative embodiment, varying combinations of TMSI MS ID messages and IMSI MS ID messages are combined into paging requests which enhance the efficiency of paging in a GSM mobile radiotelephone System.

A paging request Type 1 message is used to page up to two MSs. The MSs may be identified by either their International Mobile Station Identification (IMSI) or a Temporary Mobile Station Identity (TMSI) allocated by the network. Table 1 shows the format of the paging request type 1 message. The types of elements shown in the table are: mandatory fixed length (MF), mandatory variable length (MV), and optional variable length (OV).

| **PAGING REQUEST TYPE 1 Message Format (BTS->MS)** | | | |
|---|---|---|---|
| **INFORMATION ELEMENT** | **TYPE** | **LENGTH** | **VALUE** |
| Protocol Discriminator | MF | 0.5 | 0x06 |
| Transaction Identifier | MF | 0.5 | 0x00 |
| Message Type | MF | 1 | 0x21 |
| Page Mode | MF | 1 | varies |
| Mobile Identify | MV | 1-9 | varies |
| Mobile Identify | OV | 2-10 | varies |

Paging request type 2 messages are sent on the paging channel to two or three MSs to trigger a channel access. Two of the three MSs must be identified by TMSI to utilize this message. Table 2 shows the format of the paging request type message.

| **PAGING REQUEST TYPE 2 Message Format (BTS->MS)** | | | |
|---|---|---|---|
| **INFORMATION ELEMENT** | **TYPE** | **LENGTH** | **VALUE** |
| Protocol Discriminator | MF | 0.5 | 0x06 |
| Transaction Identifier | MF | 0.5 | 0x00 |
| Message Type | MF | 1 | 0x22 |
| Page Mode | MF | 1 | varies |
| TMSI | MF | 4 | varies |
| TMSI | MF | 4 | varies |
| Mobile Identify | OV | 2-10 | varies |

Paging request type 3 messages are sent on the paging channel to exactly four MSs to trigger a channel access. Each MS must be identified by a TMSI. MSs identified by IMSI may not be paged using paging request type 3 messages. Table 3 details this message format.

| **PAGING REQUEST TYPE 3 Message Format (BTS->MS)** | | | |
|---|---|---|---|
| **INFORMATION ELEMENT** | **TYPE** | **LENGTH** | **VALUE** |
| Protocol Discriminator | MF | 0.5 | 0x06 |
| Transaction Identifier | MF | 0.5 | 0x00 |
| Message Type | MF | 1 | 0x24 |
| Page Mode | MF | 1 | varies |
| TMSI | MF | 4 | varies |
| TMSI | MF | 4 | varies |
| TMSI | MF | 4 | varies |
| TMSI | MF | 4 | varies |

As described above, paging request type 1 messages allow for the bundling of up to two MSs identified by either TMSI or IMSI. Paging request Type 2 messages contain up three three MSs, at least two of which must be identified by TMSI. Paging request Type 3 messages contain up to four MSs, all of which must be identified by TMSI.

Another way to represent the choices of formatting paging request message is shown in the table shown in FIG. 5. The rows indicate the number of MSs to be paged according to their IMSI and the columns represent the number of MSs to page according to their TMSI. The entries in the table indicate the paging request message type to be used in paging the particular combination of IMSIs and TMSIs.

While a specific example of improving the efficiency of broadcasting paging requests has been disclosed, it is readily apparent that many variations thereon may be implemented by those skilled in the art without departing from the scope of the invention.

## Claims

1. Apparatus for processing paging commands in a cellular radiotelephone system in which paging commands are of at least two types based upon MS mobile station identifiers IDs in the radiotelephone system, comprising:
a base station (BS) (103,104,105) including;
(a) a base station controller (BSC) (201) for generating paging command messages in a first and second type format suitable for the first and second MS IDs being paged; including;
(i) a connection (106,107,108) to a mobile switching center (MSC) (109) for receiving paging messages conforming to and to be addressed to first and second type MS IDs;
characterized by:
(ii) data processing circuitry (202) for queuing paging command messages into first and second data stacks of the paging command messages corresponding to predetermined numerical combinations of the first and second type MS IDs defining first, second and third paging request messages;
(iii) stored program control circuitry (204,205,206) included in the data processing circuitry for determining when a combination of stored paging commands in at least one of the first and second stacks represents a numerical combination defining one of the first second and third paging requests and for constructing a paging request from a predefined numerical combination of paging commands representing one of the first, second and third paging request format;
(b) a base station transceiver (BTS) (311) apparatus connected to the BSC and operative for serially transmitting paging requests to a mobile telephone station (MS) via radio airwave links.

2. Apparatus for processing paging commands in a cellular radiotelephone system, as claimed in claim 1;
wherein the data processing circuitry includes instructions to transmit a paging request to the BTS to be transmitted if the combination of paging commands includes,
two commands of two TMSI command types and IMSI command types.

3. Apparatus for processing paging commands in a cellular radiotelephone system, as claimed in claim 1;
wherein the data processing circuitry includes instructions to transmit a paging request to the BTS to be transmitted if the combination of paging commands includes,
three commands of two TMSI command types and one of a TMSI and IMSI command type.

4. Apparatus for processing paging commands in a cellular radiotelephone system, as claimed in claim 1;
wherein the data processing circuitry includes instructions to transmit a paging request to the BTS to be transmitted if the combination of paging commands includes,
four TMSI command types.

5. A method of processing paging messages in a cellular radio telephone system in which a form of paging messages is governed by types of identifiers used to identify mobile stations (MSs) served in the cellular system with at least two identifiers being used; comprising the steps of:
generating paging messages at a mobile switching center (MSC);
sending the paging command messages to a base station controller (BSC) which constructs a paging command message for each MS to be paged and forwarding it to a base station transceiver (BTS);
characterized by the steps of:
queuing the paging command messages at the BTS into paging request messages according to identifiers of MSs; by:
bundling the paging command messages into groups of paging command messages according to predefined numerical combinations of paging command messages associated with MSs of each identifier to form specified types of paging requests, and
serially transmitting the paging commands of groups of paging commands of complete types of paging requests as a group transmission.

6. A method of processing paging messages in a cellular radio telephone system as claimed in claim 5;
wherein at least two identifiers TMSI and IMSI are used to identify the MSs.

7. A method of processing paging messages in a cellular radio telephone system as claimed in claim 5;
wherein the paging requests are arranged into three groups including at least a first paging request group including at least a paging request for two MSs having the same identifier type.

8. A method of processing paging messages in a cellular radio telephone system as claimed in claim 5;
wherein the paging requests are arranged into three groups including at least a second paging request group including at least a paging request for three MSs with at least two MSs having a TMSI identifier.

9. A method of processing paging messages in a cellular radio telephone system as claimed in claim 5;
wherein the paging requests are arranged into three groups including at least a third paging request group including paging requests for four MSs having a TMSI identifier.

## Patentansprüche

1. Vorrichtung zur Verarbeitung von Rufbefehlen in einem zellularen Funkfernsprechsystem, in dem Rufbefehle von mindestens zwei Arten sind, die auf Mobilstationskennungen MS ID im Funkfernsprechsystem basieren, mit einer Basisstation (BS) (103, 104, 105) mit folgenden:
(a) einer Basisstationssteuerung (BSC) (201) zur Erzeugung von Rufbefehlmeldungen in einem Format einer ersten und zweiten Art, das für die gerufenen ersten und zweiten MS ID geeignet ist, mit:
(i) einer Verbindung (106, 107, 108) mit einer Mobilvermittlungsstelle (MSC) (109) zum Empfang von Rufmeldungen, die MS ID der ersten und zweiten Art entsprechen und an diese zu adressieren sind;
gekennzeichnet durch folgendes:
(ii) Datenverarbeitungsschaltungen (202) zum Einreihen von Rufbefehlmeldungen in erste und zweite Datenstapel der Rufbefehlmeldungen, wobei die Stapel vorbestimmten numerischen Kombinationen von MS ID der ersten und zweiten Art entsprechen, die erste, zweite und dritte Rufauftragsmeldungen definieren;
(iii) in den Datenverarbeitungsschaltungen enthaltene Speicherprogrammsteuerschaltungen (204, 205, 206) zur Bestimmung, wann eine Kombination gespeicherter Rufbefehle in mindestens einem der ersten und zweiten Stapel eine numerische Kombination darstellt, die einen der ersten, zweiten und dritten Rufaufträge definiert, und zum Aufbauen eines Rufauftrages aus einer vordefinierten numerischen Kombination von eines der ersten, zweiten und dritten Rufauftragformate darstellenden Rufbefehlen;
(b) einer mit der BSC verbundenen Basisfunkstations-(BTS) (311) Einrichtung zur seriellen Übertragung von Rufaufträgen zu einer Mobilfernsprechstation (MS) über Funk-Luftwellenstrecken.

2. Vorrichtung zur Verarbeitung von Rufbefehlen in einem zellularen Funkfernsprechsystem nach Anspruch 1, wobei die Datenverarbeitungsschaltungen Anweisungen zur Übertragung eines Rufauftrages zur BTS enthalten, nämlich ihn dann zu übertragen, wenn die Kombination von Rufbefehlen zwei Befehle von zwei TMSI-Befehlsarten und IMSI-Befehlsarten enthält.

3. Vorrichtung zur Verarbeitung von Rufbefehlen in einem zellularen Funkfernsprechsystem nach Anspruch 1, wobei die Datenverarbeitungsschaltungen Anweisungen zur Übertragung eines Rufauftrages zur BTS enthalten, nämlich ihn dann zu übertragen, wenn die Kombination von Rufbefehlen drei Befehle von zwei TMSI-Befehlsarten und einen einer TMSI- und IMSI-Befehlsart enthält.

4. Vorrichtung zur Verarbeitung von Rufbefehlen in einem zellularen Funkfernsprechsystem nach Anspruch 1, wobei die Datenverarbeitungsschaltungen Anweisungen zur Übertragung eines Rufauftrages zur BTS enthalten, nämlich ihn dann zu übertragen, wenn die Kombination von Rufbefehlen vier TMSI-Befehlsarten enthält.

5. Verfahren zur Verarbeitung von Rufmeldungen in einem zellularen Funkfernsprechsystem, wobei eine Form von Rufmeldungen durch Arten von Kennungen geregelt wird, die zur Kennzeichnung von im Zellularsystem bedienten Mobilstationen (MS) benutzt werden, wobei mindestens zwei Kennungen benutzt werden, mit folgenden Schritten:
Erzeugen von Rufmeldungen in einer Mobilvermittlungsstelle (MSC);
Senden der Rufbefehlmeldungen zu einer Basisstationsteuerung (BSC), die für jede zu rufende MS eine Rufbefehlmeldung aufbaut und Weiterleiten dieser zu einer Basisfunkstation (BTS);
gekennzeichnet durch folgende Schritte:
Einreihen der Rufbefehlmeldungen an der BTS in Rufauftragsmeldungen nach Kennungen von MS, durch:
Bündeln der Rufbefehlmeldungen in Gruppen von Rufbefehlmeldungen nach vorbestimmten numerischen Kombinationen von mit den MS jeder Kennung verbundenen Rufbefehlmeldungen, um spezifische Arten von Rufaufträgen zu bilden, und
serielles Übertragen der Rufbefehle von Gruppen von Rufbefehlen vollständiger Arten von Rufaufträgen als eine Gruppenübertragung.

6. Verfahren zur Verarbeitung von Rufmeldungen in einem zellularen Funkfernsprechsystem nach Anspruch 5, wobei mindestens zwei Kennungen TMSI und IMSI zur Kennzeichnung der MS benutzt werden.

7. Verfahren zur Verarbeitung von Rufmeldungen in einem zellularen Funkfernsprechsystem nach Anspruch 5, wobei die Rufaufträge in drei Gruppen mit mindestens einer ersten Rufauftragsgruppe angeordnet sind, die mindestens einen Rufauftrag für zwei MS mit derselben Kennungsart enthält.

8. Verfahren zur Verarbeitung von Rufmeldungen in einem zellularen Funkfernsprechsystem nach Anspruch 5, wobei die Rufaufträge in drei Gruppen mit mindestens einer zweiten Rufauftragsgruppe angeordnet sind, die mindestens einen Rufauftrag für drei MS enthält, wobei mindestens zwei MS eine TMSI-Kennung aufweisen.

9. Verfahren zur Verarbeitung von Rufmeldungen in einem zellularen Funkfernsprechsystem nach Anspruch 5, wobei die Rufaufträge in drei Gruppen mit mindestens einer dritten Rufauftragsgruppe angeordnet sind, die Rufaufträge für vier MS mit einer TMSI-Kennung enthält.

## Revendications

1. Dispositif pour traiter les commandes d'appel sélectif dans un système de radiotéléphonie cellulaire dans lequel les commandes d'appel sélectif sont au moins de deux types basés sur des identifiants de postes mobiles MS ID dans le système de radiotéléphonie, comprenant:
une station de base (BS) (103,104,105) comportant:
(a) un contrôleur de station de base (BSC) (201) pour générer des messages de commandes d'appel sélectif dans un premier et un deuxième type de format convenant aux premier et deuxième MS ID recherchés; comportant :
(i) une connexion (106, 107, 108) à un centre de commutation mobile (MSC) (109) pour recevoir des messages d'appel sélectif conformes et adressés aux MS ID des premier et deuxième types;
caractérisé par:
(ii) des circuits de traitement de données (202) pour mettre en attente les messages de commandes d'appel sélectif dans des première et deuxième piles de données des messages de commandes d'appel sélectif correspondant à des combinaisons numériques prédéterminées des MS ID des premier et deuxième types définissant des premier, deuxième et troisième messages de demande d'appel sélectif;
(iii) des circuits de commande par programmes enregistrés (204,205,206) inclus dans les circuits de traitement de données pour déterminer quand une combinaison de commandes d'appel sélectif mémorisées dans au moins une des première et deuxième piles représente une combinaison numérique définissant une des première, deuxième et troisième demandes d'appel sélectif et pour construire une demande d'appel sélectif à partir d'une combinaison numérique prédéfinie de commandes d'appel sélectif représentant l'un des premier, deuxième et troisième formats de demande d'appel sélectif;
(b) un appareil émetteur-récepteur de station de base (BTS) (311) connecté au BSC et fonctionnant pour transmettre sériellement des demandes d'appel sélectif à un poste téléphonique mobile (MS) par l'intermédiaire de liaisons par ondes aériennes radio.

2. Dispositif pour traiter les commandes d'appel sélectif dans un système de radiotéléphonie cellulaire, selon la revendication 1;
dans lequel les circuits de traitement de données comportent des instructions pour transmettre une demande d'appel sélectif au BTS devant être transmise si la combinaison des commandes d'appel sélectif comporte,
deux commandes de deux types de commande TMSI et types de commande IMSI.

3. Dispositif pour traiter les commandes d'appel sélectif dans un système de radiotéléphonie cellulaire, selon la revendication 1;
dans lequel les circuits de traitement de données comportent des instructions pour transmettre une demande d'appel sélectif au BTS devant être transmise si la combinaison des commandes d'appel sélectif comporte,
trois commandes de deux types de commande TMSI et une d'un type de commande TMSI et IMSI.

4. Dispositif pour traiter les commandes d'appel sélectif dans un système de radiotéléphonie cellulaire, selon la revendication 1;
dans lequel les circuits de traitement de données comportent des instructions pour transmettre une demande d'appel sélectif au BTS devant être transmise si la combinaison des commandes d'appel sélectif comporte,
quatre types de commande TMSI.

5. Procédé de traitement de commandes d'appel sélectif dans un système de radiotéléphonie cellulaire dans lequel une forme de messages d'appel sélectif est régie par des types d'identifiants utilisés pour identifier des postes mobiles (MS) desservis dans un système cellulaire, deux identifiants au moins étant utilisés, comprenant les étapes de:
génération de messages d'appel sélectif au niveau d'un centre de commutation mobile (MSC);
envoi des messages de commande d'appel sélectif à un contrôleur de station de base (BSC) qui construit un message de commande d'appel sélectif pour chaque MS devant être appelé et l'envoi du message à un émetteur-récepteur de station de base (BTS);
caractérisé par les étapes de:
mise en attente des messages de commande d'appel sélectif au BTS dans des messages de demande d'appel sélectif conformément aux identifiants des MS; en:
regroupant les messages de commande d'appel sélectif en groupes de messages de commande d'appel sélectif conformément à des combinaisons numériques prédéfinies de messages de commande d'appel sélectif associés aux MS de chaque identifiant pour former des types spécifiques de demandes d'appel sélectif, et
transmettant sériellement les commandes d'appel sélectif de groupes de commandes d'appel sélectif de types complets de demandes d'appel sélectif par transmission groupée.

6. Procédé de traitement de messages d'appel sélectif dans un système de radiotéléphonie cellulaire selon la revendication 5;
dans lequel au moins deux identifiants TMSI et IMSI sont utilisés pour identifier les MS.

7. Procédé de traitement des messages d'appel sélectif dans un système de radiotéléphonie cellulaire, selon la revendication 5;
dans lequel les demandes d'appel sélectif sont disposées en trois groupes comportant au moins un premier groupe de demandes d'appel sélectif comportant au moins une demande d'appel sélectif pour deux MS ayant le même type d'identifiant.

8. Procédé de traitement des messages d'appel sélectif dans un système de radiotéléphonie cellulaire, selon la revendication 5;
dans lequel les demandes d'appel sélectif sont disposées en trois groupes comportant au moins un deuxième groupe de demandes d'appel sélectif comportant au moins une demande d'appel sélectif pour trois MS, au moins deux MS ayant un identifiant TMSI.

9. Procédé de traitement des messages d'appel sélectif dans un système de radiotéléphonie cellulaire, selon la revendication 5;
dans lequel les demandes d'appel sélectif sont disposées en trois groupes comportant au moins un troisième groupe de demandes d'appel sélectif comportant des demandes d'appel sélectif pour quatre MS ayant un identifiant TMSI.
